# EUROPÄISCHE PATENTSCHRIFT

(11) **EP 1 389 593 B1**
(45) Veröffentlichungstag und Bekanntmachung des Hinweises auf die Patenterteilung: **14.12.2005**
(21) Anmeldenummer: 03018410.5
(22) Anmeldetag: 13.08.2003
(51) Int. Cl.: B65G 23/06

(54) **Antriebsvorrichtung für ein Fördermittel**
Driving device for a conveyor system
Dispositif d'entraînement pour un moyen de transport

(30) Priorität: 14.08.2002 DE 10237277
(43) Veröffentlichungstag der Anmeldung: 18.02.2004
(73) Patentinhaber: Bosch Rexroth AG, 70184 Stuttgart (DE)
(72) Erfinder: Koban, Johannes, Dipl.-Ing., 70178 Stuttgart (DE); Neuber, Michael, Dipl.-Ing., 71672 Marbach a.N. (DE); Rahnfeld, Frank, 75394 Oberreichenbach (DE)
(74) Vertreter: Herzog, Markus

(56) Entgegenhaltungen:
- DE-A- 3 522 719
- US-A- 4 179 025

## Beschreibung

Die Erfindung betrifft eine Antriebsvorrichtung gemäß dem Oberbegriff des Anspruchs 1.

Derartige Antriebsvorrichtungen werden beispielsweise bei Stetigförderern in Fertigungs- und Montageeinrichtungen eingesetzt. Zum Transport des Fördergutes umfassen diese Stetigförderer ein flexibles Fördermittel, beispielsweise eine Spezialkette oder einen Spezialzahnriemen. Als Antriebseinheit kommt üblicherweise ein Antriebsrad mit beispielsweise in Form einer Verzahnung ausgebildeten Eingriffselementen zum Einsatz. Durch kraft- oder/und formschlüssigen Eingriff der Eingriffselemente der Antriebseinheit mit den Gegeneingriffselementen des Fördermittels kann von der Antriebseinheit auf das Fördermittel eine Zugkraft ausgeübt werden, welche das Fördermittel in Förderrichtung antreibt.

Die gattungsbildende US 4,179,025 beschreibt ein Fördersystem, welches durch einen Kettenantrieb angetrieben wird, bei dem der Teilungsabstand zwischen Zähnen eines Zahnrades doppelt so groß ist wie der Teilungsabstand zwischen Verbindungselementen der angetriebenen Kette.

Aus der Offenlegunsschrift DE 35 22 719 A1 ist ein Scheibenetevator bekannt, bei dem der Teilungsabstand von Ausnehmungen am Umfang einer Antriebsscheibe größer ist als der Teilungsabstand von an einem umlaufenden Seil befestigten Transportscheiben, welche in die Ausnehmungen eingreifen.

Die Antriebseinheit und das Fördermittel sind üblicherweise aus unterschiedlichen Werkstoffen gefertigt, beispielsweise aus zwei verschiedenen, für den jeweiligen Anwendungsfall besonders geeigneten Kunststoffen. Die Auswahl der jeweiligen Kunststoffe erfolgt dabei nach einer Reihe von Kriterien, unter anderem Verschleißfestigkeit, Zugfestigkeit, Dauerfestigkeit, Reibung, Herstellungskosten und dergleichen mehr. Bei derzeit bekannten Stetigförderern führen hohe Zugkräfte und Temperatureinflüsse zu einer Dehnung des Fördermittels. Hierdurch kommt es im Bereich des wechselseitigen Eingriffs von Antriebseinheit und Fördermittel zu Zwängungen, Geräuschen und einem partiellen Abheben des Fördermittels von der Antriebseinheit im Bereich des wechselseitigen Eingriffs. Dies wirkt sich nachteilig auf das übertragbare Drehmoment, die maximal zulässige Zugkraft und den Verschleiß der Antriebsvorrichtung aus.

Demgegenüber ist es Aufgabe der Erfindung, eine gattungsgemäβe Antriebsvorrichtung bereitzustellen, bei welcher der Teilungsabstand der Antriebseinheit und der Teilungsabstand des Fördermittels derart aufeinander abgestimmt sind, so dass der kraft- und/oder formschlüssige Eingriff zwischen Antriebseinheit und Fördermittel unter Berücksichtigung von auszugleichenden Zugkräften und Temperatureinflüssen gewährleistet ist.

Diese Aufgabe wird erfindungsgemäß durch eine gattungsgemäβe Antriebsvorrichtung mit den Merkmalen des Kennzeichens des Anspruchs 1 gelöst. Durch die erfindungsgemäße Ausbildung von Antriebseinheit und Fördermittel steht im Bereich des wechselseitigen Eingriffs von Antriebseinheit und Fördermittel immer mindestens ein Eingriffselement der Antriebseinheit in Eingriff mit einem Gegeneingriffselement des Fördermittels. Sollte es zu einer Dehnung des Fördermittels kommen, sei es durch hohe Zugkräfte oder Temperatureinflüsse, so legen sich zunehmend mehr Eingriffselemente der Antriebseinheit und Gegeneingriffselemente des Fördermittels aneinander an, wodurch das Kraftübertragungsvermögen der Antriebsvorrichtung insgesamt steigt. Erfindungsgemäß wird somit die in der Praxis nicht zu vermeidende Dehnung des Fördermittels zu einer mit dieser Dehnung einhergehenden Erhöhung des Kraftübertragungsvermögens ausgenutzt. Gleichzeitig werden die beim Stand der Technik auftretenden Zwängungen und dergleichen zuverlässig vermieden.

Geht man von der Konstruktion einer herkömmlichen Antriebsvorrichtung aus, so kann eine erfindungsgemäße Antriebsvorrichtung in einfacher Weise dadurch konstruiert werden, dass man den Abstand zwischen zwei aufeinanderfolgenden Eingriffselementen der Antriebseinheit in Relation zur in Förderrichtung des Fördermittelsgemessenen Breite der Gegeneingriffselemente des Fördermittels derart wählt, dass das Verhältnis des Teilungsabstands der Antriebseinheit zum Teilungsabstand des Fördermittels etwa zwischen 1,01 und etwa 1,10, vorzugsweise etwa 1,05 beträgt.. Das heißt man braucht nicht die Form der Eingriffselelemente bzw. Zähne zu verändern, sondern lediglich deren Abstand.

Mit der vorstehend erläuterten erfindungsgemäßen Antriebsvorrichtung kann insbesondere ein gleichmäßiger, geräusch- und störungsfreier Lauf des Fördermittels erzielt werden, und dies unabhängig von der jeweiligen Betriebsweise, insbesondere bei Belastung, der Zugkraft, der Betriebstemperatur und dergleichen Parametern. Durch das gleichmäßige Anliegen des Fördermittels an der Antriebseinheit kann ferner eine günstige Krafteinleitung in das Fördermittel sichergestellt werden. Insbesondere kann ein Herausrutschen des gelängten Fördermittels außer Eingriff mit der Antriebseinheit vermieden werden. Dies hat gleichzeitg eine verminderte Reibung an Gleitleisten zur Folge, welche die Antriebseinheit umgeben, um den Eingriff von Antriebseinheit und Fördermittel sicherzustellen.

Die Erfindung wird im Folgenden an einem Ausführungsbeispiel anhand der beigefügten Zeichnung näher erläutert werden. Es stellt dar:

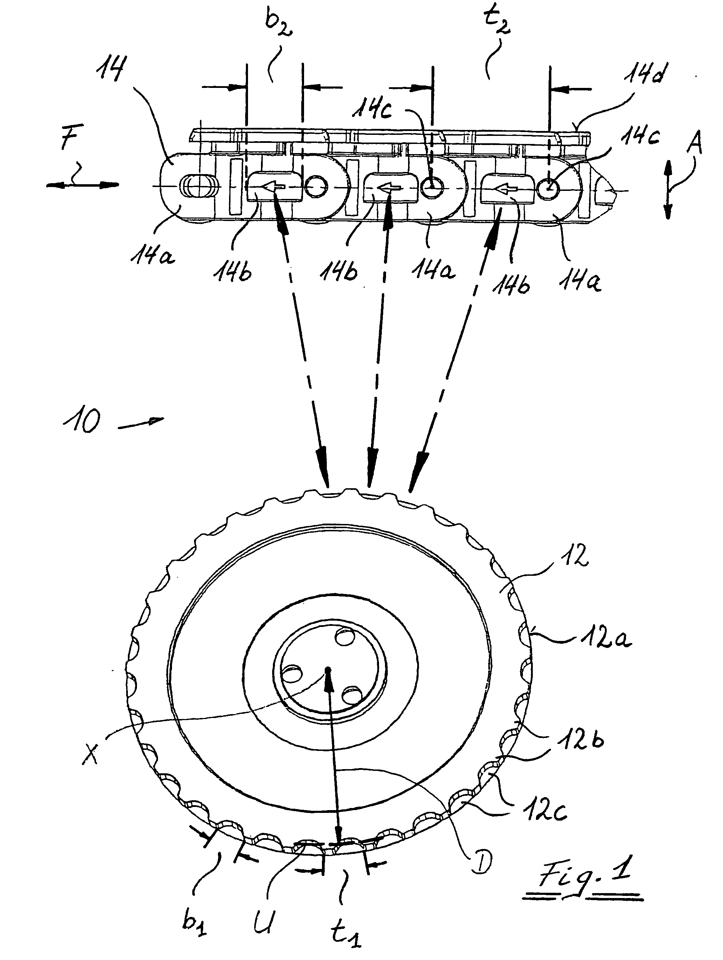

- Fig. 1:: eine explosionsartige Darstellung einer erfindungsgemäßen Antriebsvorrichtung, wobei das Antriebsrad dieser Antriebsvorrichtung perspektivisch und deren Förderkette in Seitenansicht dargestellt sind.

In Fig. 1 ist eine erfindungsgemäße Antriebsvorrichtung ganz allgemein mit 10 bezeichnet. Sie umfasst ein Antriebsrad 12 und eine Förderkette 14.

Das Antriebsrad 12 ist an seinem Außenumfang 12a verzahnt ausgebildet, das heißt es umfasst eine Mehrzahl von Zähnen 12b, welche zum Eingriff mit der Förderkette 14 dienen. Die Zähne 12b sind durch Vertiefungen 12c voneinander getrennt. Der Teilungsabstand des Antriebsrads 12, das heißt der Periodenabstand, mit dem die Zähne 12a aufeinanderfolgen, ist in Fig. 1 mit t1 bezeichnet und die Breite der Vertiefungen 12c mit b1.

Die Förderkette 14 ist aus einer Mehrzahl von Kettengliedern 14a zusammengesetzt. Diese Kettenglieder 14a umfassen an ihren Seitenflächen Eingriffselemente 14b, welche zum Eingriff der Förderkette 14 mit dem Antriebsrad 12 dienen. Der Teilungsabstand der Förderkette 14, das heißt der Abstand zwischen zwei aufeinanderfolgenden Schwenkachsen 14c der Förderkette 14 ist in Fig. 1 mit t2 bezeichnet, die in Förderrichtung F gemessene Breite der Eingriffselemente 14b mit b2.

Erfindungsgemäß weist der Teilungsabstand t1 des Antriebsrads 12 einen geringfügig größeren Wert auf als der Teilungsabstand t2 der Förderkette 14. Darüber hinaus weisen die Vertiefungen 12c zwischen den Zähnen 12b des Antriebsrads 12a eine Breite b1 auf, die größer ist als die Breite b2 der Eingriffslelemente 14b der Förderkette 14. Hierdurch steht im Bereich des wechselseitigen Eingriffs von Antriebsrad 12 und Förderkette 14 immer mindestens ein Zahn 12b in Eingriff mit einem Vorsprung 14b der Förderkette 14. Sollte es zu einer Dehnung der Förderkette 14 kommen, sei es durch hohe Zugkräfte oder Temperatureinflüsse, so legen sich zunehmend mehr Zähne 12b und Vorsprünge 14b aneinander an, wodurch das Kraftübertragungsvermögen der Antriebsvorrichtung 10 insgesamt steigt.

Nachzutragen ist noch, dass die Förderkette 14 eine flexible Förderkette ist, die in allen Raumrichtungen gebogen werden kann, also nicht nur um die Achsen 14c, sondern auch um orthogonal zur Auflagefläche 14d für Objekte verlaufende Achsen A. Gerade dieser letztgenannte Fall der seitlichen Verbiegung liegt bei der in Fig. 1 genannten Antriebsvorrichtung 10 vor, da die Förderkette 14 mit ihren seitlichen Eingriffselementen 14b mit dem verzahnten Antriebsrad 12 in Eingriff tritt. Die erfindungsgemäße Bemessung der Teilungsabstände von Antriebsrad 12 und Förderkette 14 kann jedoch auch dann mit Vorteil zur Anwendung gebracht werden, wenn die Förderkette 14 um die Achsen 14c gebogen wird.

Festzuhalten ist ferner, dass der vorbestimmte Teilungsabstand an dem Antriebsrad 12 in einem radialen Abstand D von der Achse X zu bestimmen ist, der der Lage der Schwenkachsen 14c der Förderkette 14 bei vollem Eingriff in die Verzahnung des Antriebsrads 12 entspricht (Umfangslinie U).

## Patentansprüche

1. Antriebsvorrichtung (10), umfassend:
- eine Antriebseinheit (12) mit einer Mehrzahl von Eingriffselementen (12b), welche an der Antriebseinheit (12) mit einem vorbestimmten Teilungsabstand (t1) angeordnet sind,
- ein flexibles Fördermittel (14) mit einer Mehrzahl von Gegeneingriffselementen (14b), welche an dem Fördermittel (14) mit einem vorbestimmten Teilungsabstand (t2) angeordnet sind und zum Antreiben des Fördermittels (14) mit den Eingriffselementen (12b) der Antriebseinheit (12) in Eingriff bringbar sind,
wobei der Teilungsabstand (t1) der Eingriffselemente (12b) der Antriebseinheit (12) größer ist als der Teilungsabstand (t2) der Gegeneingriffselemente (14b) des Fördermittels (14),
**dadurch gekennzeichnet, dass** das Verhältnis des Teilungsabstands (t1) der Antriebseinheit (12) zum Teilungsabstand (t2) des Fördermittels (14) zwischen etwa 1,01 und etwa 1,10 beträgt.

2. Antriebsvorrichtung nach Anspruch 1,
**dadurch gekennzeichnet, dass** der Abstand (b1) zwischen zwei aufeinanderfolgenden Eingriffselementen (12b) der Antriebseinheit (12) größer ist als die in Förderrichtung (F) des Fördermittels (14) gemessene Breite (b2) der Gegeneingriffselemente (14b) des Fördermittels (14).

3. Antriebsvorrichtung nach Anspruch 1 oder 2,
**dadurch gekennzeichnet, dass** das Verhältnis des Teilungsabstands (t1) der Antriebseinheit (12) zum Teilungsabstand (t2) des Fördermittels (14) etwa 1,05, beträgt.

## Claims

1. Driving device (10), comprising:
- a drive unit (12) having a plurality of engagement elements (12b), which are arranged on the drive unit (12) with a predetermined pitch spacing (t1),
- a flexible conveyor system (14) having a plurality of matching engagement elements (14b), which are arranged on the conveyor system (14) with a predetermined pitch spacing (t2) and can be brought into engagement with the engagement elements (12b) of the drive unit (12) in order to drive the conveyor system (14), the pitch spacing (t1) of the engagement elements (12b) of the drive unit (12) being greater than the pitch spacing (t2) of the matching engagement elements (14b) of the conveyor system (14),
**characterized in that** the ratio of the pitch spacing (t1) of the drive unit (12) to the pitch spacing (t2) of the conveyor system (14) is between about 1.01 and about 1.10.

2. Driving device according to Claim 1, **characterized in that** the spacing (b1) between two successive engagement elements (12b) of the drive unit (12) is greater than the width (b2) of the matching engagement elements (14b) of the conveyor system (14), measured in the conveying direction (F) of the conveyor system (14).

3. Driving device according to Claim 1 or 2, **characterized in that** the ratio of the pitch spacing (t1) of the drive unit (12) to the pitch spacing (t2) of the conveyor system (14) is about 1.05.

## Revendications

1. Dispositif d'entraînement (10) comprenant :
- une unité d'entraînement (12) avec une pluralité d'éléments de prise (12b) qui sont disposés sur l'unité d'entraînement (12) suivant un pas (t1) prédéterminé,
- un moyen de transport flexible (14) avec une pluralité de contre-éléments de prise (14b) qui sont disposés sur le moyen de transport (14) suivant un pas (t2) prédéterminé et qui peuvent être amenés en prise avec les éléments de prise (12b) de l'unité d'entraînement (12), pour l'entraînement du moyen de transport (14),
le pas (t1) des éléments de prise (12b) de l'unité d'entraînement (12) étant supérieur au pas (t2) des contre-éléments de prise (1 4b) du moyen de transport,
**caractérisé en ce que** le rapport du pas (t1) de l'unité d'entraînement (12) au pas (t2) du moyen de transport (14) est compris entre environ 1,1 et environ 1,10.

2. Dispositif d'entraînement selon la revendication 1,
**caractérisé en ce que** la distance (b1) entre deux éléments de prise (12b) successifs de l'unité d'entraînement (12) est supérieure à la largeur (b2), mesurée dans la direction de transport (F) du moyen de transport (14), des contre-éléments de prise (14b) du moyen de transport (14).

3. Dispositif d'entraînement selon la revendication 1 ou 2,
**caractérisé en ce que** le rapport du pas (t1) de l'unité d'entraînement (12) au pas (t2) du moyen de transport (14) est d'environ 1,05.
